# EUROPÄISCHE PATENTSCHRIFT

(11) **EP 1 095 646 B1**
(45) Veröffentlichungstag und Bekanntmachung des Hinweises auf die Patenterteilung: **28.12.2005**
(21) Anmeldenummer: 00121714.0
(22) Anmeldetag: 05.10.2000
(51) Int. Cl.: A61G 5/06, B62B 5/02

(54) **Radanordnung, insbesondere für Behinderten-Treppenfahrgeräte**
Wheel assembly especially for stair climbing trolley for disabled persons
Arrangement de roue notamment pour chariot pour monter des escaliers pour personnes handicapées

(30) Priorität: 28.10.1999 DE 19951914
(43) Veröffentlichungstag der Anmeldung: 02.05.2001
(73) Patentinhaber: Richter Rehabilitationstechnologie GmbH & Co. KG, 95349 Thurnau (DE)
(72) Erfinder: Koch, Michael, 95488 Eckersdorf (DE)
(74) Vertreter: Hübner, Gerd

(56) Entgegenhaltungen:
- DE-A- 19 805 140
- FR-A- 2 364 800
- GB-A- 1 554 186

## Beschreibung

Die Erfindung betrifft eine Radanordnung, insbesondere für Behinderten-Treppenfahrgeräte, mit dem im Oberbegriff des Anspruches 1 angegebenen Merkmalen.

Zum Hintergrund der Erfindung ist festzuhalten, daß Treppenfahrgeräte für Behinderte, treppengängige Rollstühle u. dgl. aus Sicherheitsgründen mit Radanordnungen versehen sind, die bei Annäherung des Fahrgerätes an eine nach unten führende Treppe für ein automatisches Abbremsen des Fahrgerätes auf mechanischem Wege sorgen. Dazu weisen solche Fahrgeräte in der Regel zwei Radanordnungen auf, die jeweils mit einem Laufrad und einer dem Laufrad zugeordneten Bremsanordnung versehen sind. Letztere weist einen an eine Bremsfläche des Laufrades zustellbaren Bremsbacken auf. Die Bremswirkung wird durch ein Tastrad gesteuert, das in Fahrtrichtung vor dem Laufrand angeordnet und an einem Schwenkhebel freilaufend gelagert ist, der an der Radaufhängung des Laufrades in Richtung zum Boden beaufschlagt schwenkbar gelagert ist und an dem der Bremsbacken angeordnet ist.

Beim Fahren auf ebenen Untergrund läuft das Tastrad auf dem Boden, wobei es entgegen der Beaufschlagungskraft so ausgelenkt ist, daß der Bremsbacken nicht in Kontakt mit der Bremsfläche am Laufrad steht. Fährt das Fahrgerät auf eine nach unten führende Treppe zu, so rollt zuerst das Tastrad über die Stufenkante und kann durch die Beaufschlagung zusammen mit dem Schwenkhebel nach unten abkippen. Dadurch wird der Bremsbacken gegen die Bremsfläche zugestellt und das Laufrad schlagartig abgebremst. Durch diese Blockierbremsung wird ein Absturz des Fahrgerätes über die Treppe verhindert.

Bei den bekannten Radanordnungen ist der Bremsbacken am Schwenkhebel fest angeordnet. Seine Position am Schwenkhebel und dessen Schwenkbewegung beim Bremsvorgang sind so aufeinander abgestimmt, daß die teilzylindrische Bremsbelag-Fläche möglichst flächig an die zur Laufrad-Rotationsachse hinweisende, innenringförmige Bremsfläche des Laufrades gepreßt wird. Dies ist aufgrund der gegebenen Toleranzen und gelenkigen Aufhängung des Schwenkhebels an der Radaufhängung des Laufrades höchst problematisch. In der Praxis wird dementsprechend in der Regel kein flächiger, sondern ein Punkt- oder höchstens Linienkontakt zwischen der Bremsbacken-Fläche und der Bremsfläche erzielt. Damit ist die wirksame Bremsfläche gegenüber der an sich zur Verfügung gestellten Gesamtoberfläche des Bremsbelages erheblich reduziert. Ferner ist aufgrund des undefinierten Kontaktes zwischen Bremsbelag und Bremsfläche auch die Bremskraft undefiniert, was zu einer unerwünschten Einschränkung der Zuverlässigkeit solcher Bremsanordnungen führen kann. Schließlich führt der undefinierte Kontakt zwischen Bremsbelag und Bremsfläche zu einem ungleichmäßigen Verschleiß des Bremsbelages, was wiederum deren Lebensdauer reduziert.

Ausgehend von der geschilderten Problematik liegt der Erfindung die Aufgabe zugrunde, eine Radanordnung der gattungsgemäßen Art so zu verbessern, daß die Funktionszuverlässigkeit, insbesondere im Hinblick auf einen schlagartigen Bremseingriff und die Lebensdauer ihrer Bremsanordnung erheblich gesteigert werden.

Diese Aufgabe wird laut Kennzeichnungsteil des Anspruches 1 dadurch gelöst, daß der Bremsbacken um eine parallel zur Schwenkachse des Schwenkhebels liegende Kippachse kippbar am Schwenkhebel gelagert ist.

Durch diese gelenkige Aufhängung des Bremsbackens kann sich dieser bei einem Eingriff mit der Bremsfläche am Laufrad immer optimal einstellen, so daß ein flächiger Kontakt zwischen der Belag-Bremsfläche und der Gegenfläche am Laufrad sich einstellt. Dies wiederum führt zu einer definierten Bremskraft mit entsprechend erhöhter Zuverlässigkeit der Bremse und einem gleichmäßigen Verschleiß des Bremsbelages über die gesamte Bremsfläche.

Bevorzugte Ausführungsformen der Radanordnung sind in den Unteransprüchen angegeben. Weitere Merkmale, Einzelheiten und Vorteile ergeben sich ferner aus der folgenden Beschreibung, in der ein Ausführungsbeispiel der Erfindung anhand der beigefügten Zeichnungen näher erläutert wird. Es zeigen:
- Fig. 1: eine Seitenansicht der Radanordnung von innen,
- Fig. 2: eine Ansicht der Radanordnung aus Pfeilrichtung II nach Fig. 1, und
- Fig. 3: eine vergrößerte, ausschnittsweise Detail-Seitenansicht einer Radanordnung in einer zweiten Ausführungsform.

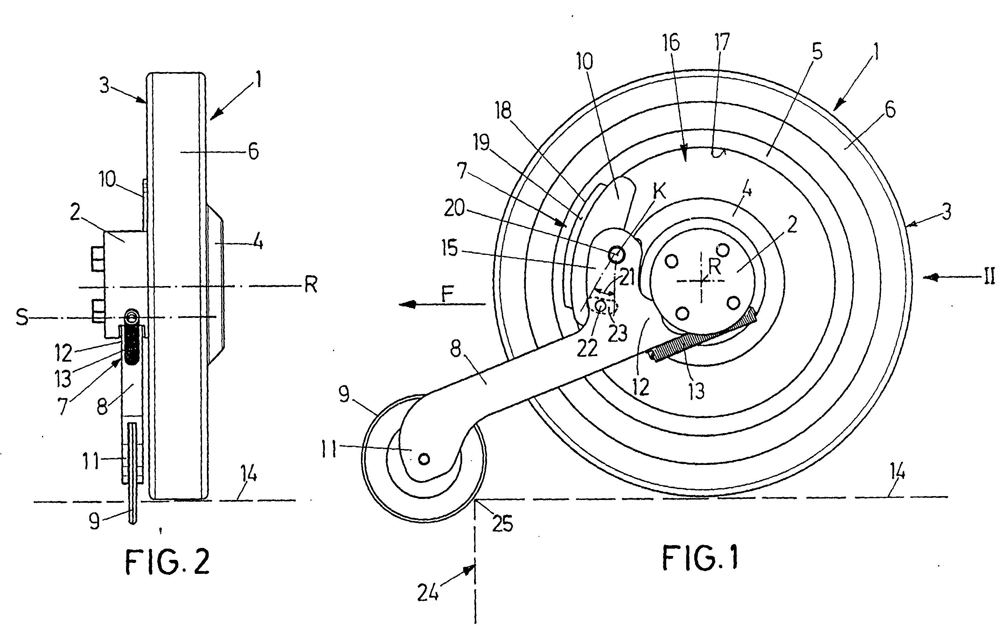

Wie insbesondere aus Fig. 1 deutlich wird, weist die als Ganzes mit 1 bezeichnete Radanordnung eine als im wesentlichen zylindrischer Block ausgeführte Radaufhängung 2 auf, die an einem Rahmengestell eines nicht näher dargestellten Treppenfahrgerätes, Rollstuhles o. dgl. angeschraubt wird. Hauptelement der Radanordnung 1 ist das Laufrad 3, dessen Nabe 4 über ein nicht näher dargestelltes Radlager drehbar an der Radaufhängung 2 befestigt ist. An die Nabe 4 schließt sich eine massive, scheibenförmige Felge 5 an, auf der ein Vollgummi-Reifen 6 sitzt.

Dem Laufrad 3 ist eine als Ganzes mit 7 bezeichnete Blockier-Bremsanordnung zugeordnet, die als Hauptteil einen Schwenkhebel 8 mit einem Tastrad 9 und einem Bremsbacken 10 aufweist. Der Schwenkhebel 8 ist mit einem Ende um eine parallel zur Rotationsachse R des Laufrades 3 angeordnete Schwenkachse S schwenkbar an der Radaufhängung 2 angelenkt. Im wesentlichen erstreckt sich der einarmige Schwenkhebel 8 etwa in Fahrtrichtung F des nicht dargestellten Treppenfahrgerätes und trägt an seinem freien, leicht nach unten abgekröpften Ende 11 das Tastrad 9. An seinem lagernahen Ende 12 ist zwischen dem Schwenkhebel 8 und der Radaufhängung 2 eine Zugfeder 13 eingehängt, mittels der der Schwenkhebel 8 entgegen den Uhrzeigersinn bezüglich Fig. 1 nach unten federbeaufschlagt ist. Dadurch wird das Tastrad 9 während der Fahrbewegung der Radanordnung 1 auf dem Boden 14 gehalten.

Der Bremsbacken 10 ist an einem der Abkröpfrichtung des freien Endes 11 entgegengerichteten Fortsatz 15 beim lagernahen Ende 12 um eine Kippachse K kippbar am Schwenkhebel 8 gelagert, die parallel zur Schwenkachse S des Schwenkhebels 8 liegt. Wie aus Fig. 2 hervorgeht, liegt der Bremsbacken 10 seitlich neben dem als flacheisenartiges Teil ausgebildeten Schwenkhebel 8 und ist damit innerhalb einer flachzylindrischen Vertiefung 16 der Laufrad-Felge 5 plaziert. Die innenringförmige, zur Rotationsachse R hinweisende Begrenzungsfläche dieser Vertiefung 16 bildet die laufradseitige Bremsgegenfläche 17 der Bremsanordnung 7, die mit der nach außen weisenden, teilzylinderförmigen Bremsfläche 18 des im Bremsbacken 10 sitzenden Bremsbelages 19 beim Bremsvorgang kooperiert. Die Kippachse K ist in Fig. 1 im übrigen als Achsstift 20 erkennbar.

Der maximale Kippwinkel 21 des Bremsbackens 10 ist durch einen Anschlag in Form eines Stiftes 22 am Wurzelbereich des Fortsatzes 15 gebildet, der in ein strichliert dargestelltes Langloch 23 an der dem Schwenkhebel 8 zugewandten Seite des Bremsbackens 10 eingreift.

Die Funktionsweise der Bremsanordnung 7 ist kurz wie folgt zu erläutern:

Nähert sich das Laufrad 3 einem Treppenabsatz 24, so überschreitet zuerst das Tastrad 9 dessen Kante 25. Aufgrund der Beaufschlagung durch die Zugfeder 13 schwenkt der Schwenkhebel 8 nach unten, wodurch mit der Kraft der Zugfeder 13 der Bremsbacken 10 mit seiner Bremsfläche 18 in Eingriff mit der Bremsgegenfläche 17 am Laufrad 3 gebracht wird. Aufgrund der kippbaren Anordnung des Bremsbackens 10 am Schwenkhebel 8 stellt sich der Backen 10 optimal ein. Damit liegt die Bremsfläche 18 vollflächig und satt an der Bremsgegenfläche 17 an, was eine hohe Bremswirkung ergibt.

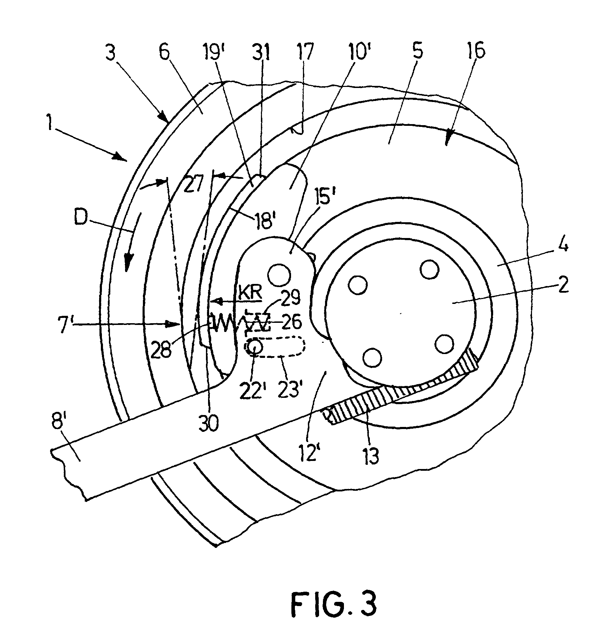

Die in Fig. 3 gezeigte, alternative Ausführungsform einer Radanordnung unterscheidet sich von der Basisvariante gemäß den Fig. 1 und 2 lediglich in einem zusätzlichen Merkmal betreffend die Einstellung des Bremsbakkens 10' in der gelösten Stellung der Bremsanordnung 7'. Insoweit werden im folgenden nur diese zusätzlichen Merkmale erläutert. Im übrigen sind die übereinstimmenden Bauteile des Laufrades 3 mit identischen Bezugszeichen versehen und es kann zur Vermeidung von Wiederholungen auf die Beschreibung der Fig. 1 und 2 verwiesen werden.

Wie nun aus der Fig. 3 deutlich wird, ist der Bremsbacken 10' mittels einer Schraubendruckfeder 26 derart in Kipprichtung KR beaufschlagt, daß bei gelöster Bremsanordnung 7' (Fig. 3) die Bremsfläche 18' des Bremsbakkens 10' zu der Bremsgegenfläche 17 am Laufrad 3 in einem spitzen, sich gegen die Drehrichtung D des Laufrades 3 öffnenden Winkel 27 steht. Die Drehrichtung D entspricht der Drehrichtung des Rades bei der Fahrt des mit der Radanordnung 7' ausgerüsteten Treppenfahrgerätes in Vorwärtsrichtung. Die Schraubendruckfeder 26 ist zu ihrer Lagerung zwischen je ein Widerlager 28, 29 am Bremsbacken 10' bzw. am Schwenkhebel 8' im Bereich des Fortsatzes 15' eingespannt.

Wie in Fig. 3 nicht explizit dargestellt ist, kann das schwenkhebelseitige Widerlager auch durch den Anschlagstift 22' am Schwenkhebel 8' gebildet sein.

Die Federbeaufschlagung des Bremsbackens in der erörterten Weise dient zur Sicherstellung, daß die Bremsanordnung 7' bei jedem Bremseingriff zu einem praktisch sofortigen Blockieren der Bremse führt. Dies wird dadurch gewährleistet, daß aufgrund des Verkippens des Bremsbackens 10' der Bremsbelag 19' immer mit der ablaufenden Kante 30 der Bremsfläche 18' mit der Bremsgegenfläche 17 am Laufrad zuerst in Kontakt kommt. Dadurch wird gegen die Federbeaufschlagung ein Drehmoment am Bremsbacken 10' erzeugt, wodurch die Bremsfläche 18' in vollflächigen Kontakt mit der Bremsgegenfläche 17 gelangt. Würde demgegenüber zuerst die auflaufende Kante 31 des Bremsbelages 19' an die Bremsgegenfläche 17 anschlagen, so würde die Drehbewegung des Laufrades 3 eine Rotation des Bremsbackens 10' in einer Richtung verursachen, die die Bremsfläche 18' von der Bremsgegenfläche weiter abhebt, was für einen plötzlichen und starken Bremseingriff natürlich vollkommen kontraproduktiv ist.

## Patentansprüche

1. Radanordnung, insbesondere für Behinderten-Treppenfahrgeräte,mit
- einem Laufrad (3), einer Radaufhängung (2) für das Laufrad (3)
- einer dem Laufrad (3) zugeordneten Bremsanordnung (7, 7'), die einen an eine Bremsfläche (17) des Laufrades (3) zustellbaren Bremsbacken (10) aufweist, sowie
- einem Tastrad (9), das
= in Fahrtrichtung (f) vor dem Laufrad (3) angeordnet, und
= an einem Schwenkhebel (8, 8') freilaufend gelagert ist, der an der Radaufhängung (2) des Laufrades (3) in Richtung zum Boden (14) beaufschlagt schwenkbar gelagert ist und an dem der Bremsbacken (10, 10') angeordnet ist,
**dadurch gekennzeichnet, daß**
- der Bremsbacken (10, 10') um eine parallel zur Schwenkachse (S) des Schwenkhebels (8, 8') liegende Kippachse (K) kippbar am Schwenkhebel (8, 8') gelagert ist.

2. Radanordnung nach Anspruch 1, **dadurch gekennzeichnet, daß** das Kipplager (20, 20') des Bremsbackens (10, 10') an einem vom Boden (14) weggerichteten Fortsatz (15, 15') des Schwenkhebels (8, 8') angeordnet ist.

3. Radanordnung nach Anspruch 1 oder 2, **dadurch gekennzeichnet, daß** der maximale Kippwinkel (21) des Bremsbackens (10, 10') durch einen Anschlag (22, 23; 22', 23') begrenzt ist.

4. Radanordnung nach Anspruch 3, **dadurch gekennzeichnet, daß** der Anschlag durch eine Stift-Langloch-Anordnung (22, 23; 22', 23') an Schwenkhebel (8, 8') und Bremsbacken (10, 10') gebildet ist.

5. Radanordnung nach einem der Ansprüche 1 bis 4, **dadurch gekennzeichnet, daß** der Bremsbacken (10') derart in Kipprichtung (KR) federbeaufschlagt ist, daß bei gelöster Bremsanordnung (7') seine Bremsfläche (18') an der Bremsgegenfläche (17') am Laufrad (3) in einen spitzen, sich gegen die Drehrichtung (D) des Laufrades (3) öffnenden Winkel (27) steht.

6. Radanordnung nach Anspruch 5, **dadurch gekennzeichnet, daß** zur Federbeaufschlagung des Bremsbackens (10') eine Schraubendruckfeder (26) vorgesehen ist, die zwischen je ein Widerlager (28, 29) am Bremsbacken (10') und Schwenkhebel (8') eingespannt ist.

7. Radanordnung nach Anspruch 4 und 6, **dadurch gekennzeichnet, daß** das schwenkhebelseitige Widerlager für die Schraubendruckfeder (26) durch den Anschlagstift (22') am Schwenkhebel (8') gebildet ist.

## Claims

1. Wheel assembly, in particular for chairlift devices for disabled persons, comprising
- a running wheel (3), a wheel suspension (2) for the running wheel (3)
- a braking assembly (7, 7') associated with the running wheel (3), which assembly comprises a brake shoe (10), which may be supplied to a braking surface (17) of the running wheel (3), as well as
- a sensor wheel (9) which
= is disposed in the direction of travel (f) in front of the running wheel (3), and
= is mounted in a freely movable manner on a pivot lever (8, 8'), which is pivotally mounted on the wheel suspension (2) of the running wheel (3) such that it is acted on toward the base (14) and on which the brake shoe (10, 10') is disposed,
**characterised in that**
- the brake shoe (10, 10') is mounted on the pivot lever (8, 8') in such a manner that it may be tilted about a tilting axis (K) located parallel to the pivot axis (S) of the pivot lever (8, 8').

2. Wheel assembly according to claim 1, **characterised in that** the tilting bearing (20, 20') of the brake shoe (10, 10') is disposed on a projection (15, 15') of the pivot lever (8, 8') facing away from the base (14).

3. Wheel assembly according to claim 1 or claim 2, **characterised in that** the maximum tilt angle (21) of the brake shoe (10, 10') is delimited by means of a stop (22, 23; 22', 23').

4. Wheel assembly according to claim 3, **characterised in that** the stop is formed by a pin/slot arrangement (22, 23; 22', 23') on the pivot lever (8, 8') and the brake shoe (10, 10').

5. Wheel assembly according to any one of the claims 1 to 4, **characterised in that** the brake shoe (10') is spring-loaded in the tilting direction (KR), such that when the braking assembly (7') is released its braking surface (18') is located on the opposite braking surface (17') of the running wheel (3) at an acute angle (27), which opens counter to the direction of rotation (D) of the running wheel (3).

6. Wheel assembly according to claim 5, **characterised in that** a helical compression spring (26) is provided for spring-loading the brake shoe (10'), which spring is clamped between a respective counter-bearing (28, 29) on the brake shoe (10') and the pivot lever (8').

7. Wheel assembly according to claims 4 and 6, **characterised in that** the counter-bearing for the helical compression spring (26) on the side of the pivot lever is formed by the stop pin (22') on the pivot lever (8').

## Revendications

1. Agencement de roues, notamment pour chariots pour monter des escaliers pour personnes handicapées, comprenant :
- une roue de roulement (3), une suspension (2) pour la roue de roulement
- un agencement de freins (7, 7') associé à la roue de roulement (3), lequel agencement comprend des segments de frein (10) pouvant garnir une surface de freinage (17) de la roue de roulement (3), ainsi
- qu'une roue palpeuse (9), qui
- dans la direction de déplacement (f), est disposée devant la roue de roulement (3), et
- est logée en roue libre sur un levier pivotant (8, 8'), qui est logé de manière pivotante sur la suspension (2) de la roue de roulement (3) en étant sollicité en direction du sol (14) et sur lequel est disposée le segment de frein (10, 10'),
**caractérisé en ce que**
- le segment de frein (10, 10') est logé sur le levier pivotant (8, 8') de manière à pouvoir basculer autour d'un axe de basculement (K) situé parallèlement à l'axe de pivotement (S) du levier pivotant (8, 8').

2. Agencement de roues selon la revendication 1, **caractérisé en ce que** le palier à bascule (20, 20') du segment de frein (10, 10') est disposé sur un prolongement (15, 15') du levier pivotant (8, 8') orienté à distance du sol (14).

3. Agencement de roues selon la revendication 1 ou 2, **caractérisé en ce que** l'angle de basculement maximal (21) du segment de frein (10, 10') est limité par une butée (22, 23 ; 22', 23').

4. Agencement de roues selon la revendication 3, **caractérisé en ce que** la butée est formée par un agencement de goupille et de trou oblong (22, 23 ; 22', 23') sur le levier pivotant (8, 8') et le segment de frein (10, 10').

5. Agencement de roues selon l'une quelconque des revendications 1 à 4, **caractérisé en ce que** le segment de frein (10') est sollicité par un ressort dans la direction de basculement (KR) de telle sorte que, lorsque l'agencement de freins (7') est desserré, la surface de freinage (18') dudit segment se situe contre la surface antagoniste de freinage (17') sur la roue de roulement (3) selon un angle aigu (27), s'ouvrant à l'encontre de la direction de rotation (D) de la roue de roulement (3).

6. Agencement de roues selon la revendication 5, **caractérisé en ce que**, pour que le segment de frein (10') soit sollicité par un ressort, il est prévu un ressort de compression hélicoïdal (26), qui est encastré entre respectivement une butée (28, 29) sur le segment de frein (10') et le levier pivotant (8').

7. Agencement de roues selon les revendications 4 et 6, **caractérisé en ce que** la butée côté levier pivotant pour le ressort de compression hélicoïdal (26) est formée par le pion de butée (22') sur le levier pivotant (8').
